# EUROPEAN PATENT APPLICATION

(11) **EP 1 482 201 A1**
(43) Date of publication of application: **01.12.2004**
(21) Application number: 04252915.6
(22) Date of filing: 19.05.2004
(51) Int. Cl.: F16D 65/12

(54) **A resilient sleeve for a splined connection**

(30) Priority: 24.05.2003 GB 0312045
(71) Applicant: Meritor Heavy Vehicle Braking Systems (UK) Limited, Cwmbran, Gwent NP44 3XU (GB)
(72) Inventor: Williamson, Michael, Newport, Gwent NP18 3SY (GB); Batchelor, Mark, Newport, Gwent NP20 3NJ (GB); Blewitt, Andrew John, Cwmbran, Gwent NP44 5LL (GB); Esau, Peter, Coedeva, Cwmbran NP44 4TE (GB)
(74) Representative: Jones, John Bryn

(57) **Abstract**

A resilient sleeve having a sleeve surface (12) for engagement with one of an external spline (26) of a first rotary member (24) or an internal spline (34a) of a second rotary member (22a), the resilient sleeve having a further sleeve surface (14a) for engagement with a further spline (36a) of the first or second rotary member so as to inhibit relative movement between the rotary members.

## Description

The present invention relates to a device for reducing the effect of mechanical hysteresis in a splined connection and is particularly, but not exclusively, concerned with a device that reduces the effect of mechanical hysteresis between an internally splined brake disc and an externally splined part of a drive shaft.

A mechanical hysteresis exists between the splined members of a driven rotary connection. This hysteresis, commonly referred to as backlash, or play, can generate unwanted noise and vibration in the connection. The noise, typically rattle, is produced by the relative movement between the intermeshed internal and external splines causing the splines to strike each other.

In some embodiments, this noise can be reduced by reducing the clearance between the splined members. However, this leads to the increased likelihood of the splined members jamming, particularly under repeated thermal expansion and contraction.

There is, therefore, a compromise to be achieved in selecting a spline clearance that minimises the noise and vibration in the splined connection whilst preventing the jamming of the splined members. Given the fact that this compromise must also take into account the environment in which the splined connection is to operate, it will be appreciated that this compromise can prove difficult to achieve.

A typical splined connection known in the art is disclosed by EP1091136 (Meritor Heavy Vehicle Braking Systems UK Ltd).

It is known to provide a sleeve for insertion between the splined members to bias the splined members towards one another thereby and take up play in the connection, as disclosed in FR 2 749 258 (Duchene & Mouhot). However, this device is arranged in the drive path of the connection, requiring the device to withstand the transmission load between the splined members.

It is also known to provide a series of retaining clips which bias the splined members towards each other, as taught in EP1158197. However this arrangement requires the additional machining of the internal spline member to receive the clips. In addition the complexity of assembly is increased by the requirement to insert a number of the biasing clips.

It is an object of the present invention to provide an improved device for reducing the effect of mechanical hysteresis in a splined connection.

According to the invention there is provided a continuous resilient sleeve having a splined internal sleeve surface for engagement with an external spline of a first rotary member, the resilient sleeve having a further splined internal sleeve surface for engagement with a further external spline of a second rotary member so as to inhibit relative movement between the rotary members, the sleeve surface being displaced radially from the further sleeve surface.

Alternatively, there is provided a resilient sleeve having a splined external sleeve surface for engagement with an internal spline of a second rotary member, the resilient sleeve having a further splined external sleeve surface for engagement with a further internal spline of a first rotary member so as to inhibit relative movement between the rotary members, the sleeve surface being displaced radially from the further sleeve surface.

By providing a splined coupling (i.e. an internal spline on a first rotary member and an external spline on a second rotary member) and by providing a further spline on one of the first or secondary rotary members, i.e. 3 splines in total, the resilient sleeve can utilise one of the splines required for the splined coupling and the further spline to reduce the backlash between the rotary members. The resilient member is able therefore to maintain the splined members in fixed relation to inhibit relative rotary movement between the splined members, thereby minimising spline rattle.

It is a further advantage of the invention that the engagement of the resilient member with the external spline of the first rotary member and the further external spline of the second rotary member allows the resilient member to be excluded from the transmission path between the rotary numbers.

Further advantageously, this feature allows the sleeve to be in engagement with the external spline of the first rotary member and the further external spline of the second rotary member. The radial displacement of the two surfaces of the resilient sleeve allows for their engagement with the two external splines of the rotary members since these splines will lie in two distinct cylindrical regions radially displaced from one another by the radial depth of the second rotary member.

For the avoidance of doubt, the longitudinal axis of the sleeve is defined as being coexistent with the axis of rotation of the rotary members. A radial plane of the sleeve is defined as any plane existing perpendicular to the axis of rotation of the rotary members. The longitudinal centreline of the sleeve exists midway between the longitudinal extremities of the sleeve.

Preferably the sleeve surface and the further sleeve surface are splined and have an identical number of spline teeth.

Advantageously, this feature provides for the engagement of the resilient sleeve with a second rotary member having a concurrently formed internal and external spline.

In a preferred embodiment the spline teeth of the sleeve surface are circumferentially offset from the spline teeth of the further sleeve surface, preferably offset by 10% to 50% of a tooth pitch, and more preferably by 20% to 30%.

The offsetting of the teeth of the resilient sleeve causes the biasing of one spline towards the other.

In a preferred feature of the invention the second rotary member is a brake disc such as a known brake disc of EP1091136. The internal splines of the brake disc are formed by pressing the base section of the brake disc. This process also produces an external spline in the radial outside surface of the base section of the brake disc. As a result the brake disc manufacturing process of known discs does not have to be altered in order to form the external spline on the brake disc.

In a further aspect of the invention there is provided a method of assembling a brake assembly comprising the steps of providing part of a drive shaft, providing a brake sub-assembly having; a brake housing, a brake actuator, two brake discs, a resilient sleeve, wherein the splines of the brake discs are co-aligned by their splined engagement with the resilient sleeve, comprising the further step of inserting said part of the drive shaft into the sub-assembly by engaging the external spline of said part of the drive shaft with the aligned internal splines of the brake discs.

Advantageously this allows for the alignment of the splines of the brake disc before the insertion of the part of the drive shaft to the assembly. This greatly simplifies the assembly process since the second brake disc does not have to be engaged by a process of trial and error. This feature is particularly advantageous when assembling brakes which are "fail safe", that is to say, brakes in which the braking force is applied by a strong spring and brake release is achieved by compressing this spring, typically by a hydraulic or pneumatic system. When assembling such fail safe brakes, e.g. on a production line, the hydraulic or pneumatic actuation system may not be available, thus it is necessary to provide tooling to ensure all splines are correctly aligned, since if assembled misaligned it can be very difficult to release the brake in order to allow relative rotation of the brake discs to allow assembly, in view of the fail safe spring. A sleeve in accordance with the present invention acts to align the brake discs, thereby obviating the need for a separate alignment tool.

A resilient sleeve in accordance with the invention will now be described, by way of example only, with reference to the accompanying drawings in which:
Figure 1a is an end view of a resilient sleeve in accordance with the present invention,
Figure 1b is a side view of the resilient sleeve of Figure 1a sectioned along line IB-IB in Figure 1a, with a portion shown in greater detail.
Figure 2 is a part-sectioned side view of a brake assembly showing the resilient sleeve of Figure 1.

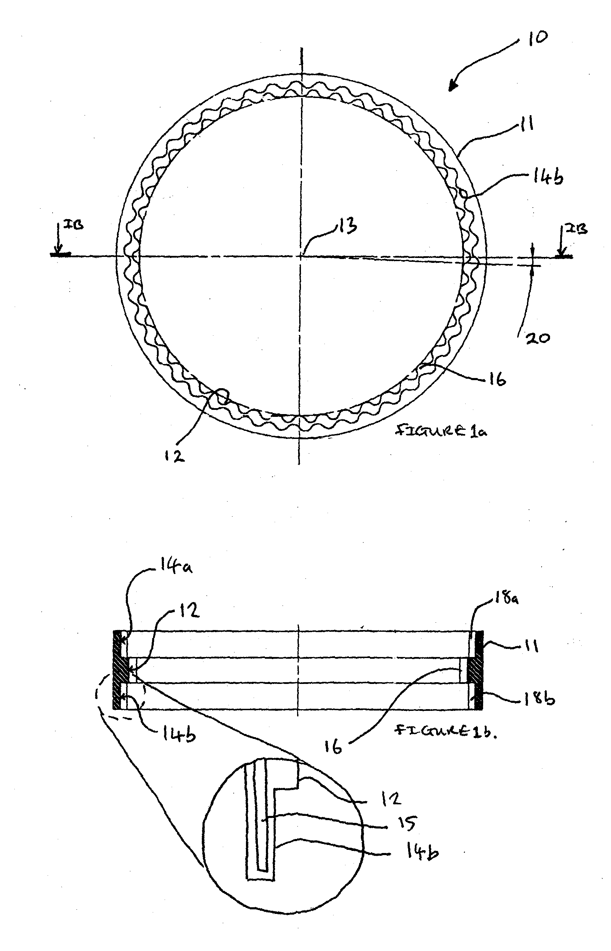

In Figure 1a and 1b a resilient sleeve 10 has a substantially circular outer profile 11. Its inner profile is formed by a sleeve surface 12 located between a further sleeve surface 14a and an additional sleeve surface 14b. The sleeve surface 12 is raised from the further sleeve surface 14a and additional sleeve surface 14b in a direction towards the centre 13 of the resilient sleeve 10. The sleeve surface 12 defines a set of spline teeth 16 and the further sleeve surface 14a and additional sleeve surface 14b each define a set of spline teeth 18a and 18b respectively. The sleeve surface 12, further sleeve surface 14a and additional sleeve surface 14b, each have the same number of teeth. The spline teeth of the sleeve surface 12, and the further sleeve surface 14a, have between them an offset 20 which equates to 0.1 to 0.5 of a tooth pitch. The spline teeth of the further sleeve surface and additional sleeve surface are aligned.

It should be noted that the tooth pitch of the sleeve surface 12 is calculable by multiplying the tooth pitch of the further sleeve surface 14a by the ratio of the diameter of the sleeve surface 12 to the diameter of the further sleeve surface 14a.

In Figure 1b the sleeve surface 12 is arranged such that the further sleeve surface 14a and additional sleeve surface 14b are equal in area. The sleeve surface 12 is disposed on the resilient sleeve 10 such there exists an axis of symmetry about the longitudinal centreline of the sleeve.

The sleeve has an annular internal reinforcement 15 in the form of a metal band embedded within the sleeve. The purpose of the internal reinforcement 15 is to prevent the expansion of the sleeve under centrifugal acceleration experienced when rotating at speed. The mode of rotation of the sleeve will be discussed further below. It is conceivable within the scope of the invention that the internal reinforcement be formed from alternative material, such as cotton braid, carbon fibre or glass fibre, and that the band may, or may not be of unitary annular construction.

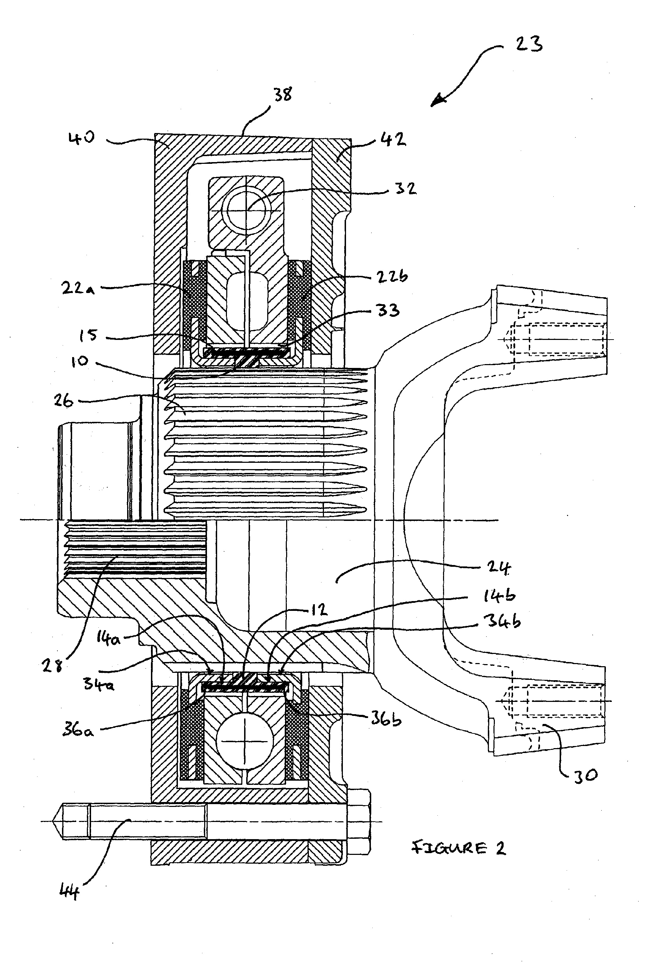

In Figure 2 a brake assembly 23 (in this case a transmission brake assembly) has a brake housing 38, two brake discs 22a, 22b, a brake actuator 32, a resilient sleeve 10, and a coupling 24. Coupling 24 forms part of a drive shaft connecting a gear box (not shown) to further parts of a transmission assembly (not shown).

The brake actuator 32 is in the form of a ball and ramp actuator, well known in the art. Operation of the actuator 32 causes the displacement of balls on ramps located between two halves of the actuator 32. This displacement causes a longitudinal separation of the two halves of the actuator 32 which causes a load to be applied to the brake discs 22a, 22b. This load is reacted by two halves 40, 42 of the brake housing 38, described above.

Between the sleeve 10 and the brake actuator 32 is an annular space 33 which provides clearance for the rotation of the sleeve with respect the actuator. It also allows for any expansion observed in the sleeve during rotation at high speed, although it will be noted that this expansion is negligible given the presence within the sleeve of the internal reinforcement.

The coupling (also known as a first rotary member) has an external spline 26, an internal input spline 28 for driven engagement with an output shaft of a gearbox (not shown for clarity) and an output 30 forming one half of a universal joint connection.

The brake disc 22a (also known as a second rotary member) has an internal spline 34a and an external spline 36a (also known as a further spline). Similarly, brake disc 22b (also known as a third rotary member) has an internal spline 34b and an external spline 36b (also known as a further spline). These internal and external splines are formed concurrently during manufacture of the brake disc, typically by pressing. The external spline 36a engages with the spline 18a of the further sleeve surface 14a. Similarly, the external spline 36b engages with spline 18b of the additional sleeve surface 14b. The internal splines 34a, 34b of the brake discs 22a, 22b engage with the external spline 26 of the coupling 24.

Whilst the spline teeth 16 of the sleeve surface 12 engage with the external spline 26 of the coupling 24, the spline teeth 18a and 18b of the further sleeve surface 14a and the additional sleeve surface 14b engage with the external splines 36a, 36b of the brake discs 22a, 22b.

The offset of the spline teeth of the sleeve surface 12, relative to the further sleeve surface 14 and additional sleeve surface 14b ensures that the spline teeth of the brake discs 22a, 22b and coupling 24 are rotationally biased by the resilient sleeve to be in contact.

This has the effect of inhibiting relative rotary movement of the rotary members thereby reducing noise and wear to the spline teeth.

The teeth of one of the rotary members will be biased towards the teeth of the other in a predetermined direction of rotation of the coupling 24. In use the brake assembly 23 will act as a transmission parking brake, being mounted to a vehicle gearbox by mounting bolts 44 as shown in figure 2.

It is conceivable within the scope of the invention that the brake assembly be mounted elsewhere on the driveline of the vehicle, for example at the rear of the drive shaft, bolted to the vehicle rear axle differential casing.

There can occur, in parking brakes, a brake drag where the brake does not fully disengage. Consequently, the offset is preferably arranged such that the teeth of the sleeve surface are offset with respect to the teeth of the further sleeve surface in the direction of rotation of the drive shaft observed when the vehicle is travelling forwards so that any brake drag forces the already contacting surfaces of splines 26 and 34 and the already contacting surfaces of splines 26 and 36 further into engagement. In this way the appropriate spline surfaces always remain in contact and thus no noise is generated by spline rattle.

In further embodiments, the sleeve surface and/or further sleeve surface could be arranged to be an interference fit on their associated rotary component. This would also prevent spline rattle. Where present, the additional sleeve surface could also be arranged to be an interference fit on its associated component.

In yet further embodiments, combinations of offset sleeve splines and interference fit arrangements could be used to prevent spline rattle.

## Claims

1. A continuous resilient sleeve having a splined internal sleeve surface (12) for engagement with an external spline (26) of a first rotary member (24), the resilient sleeve having a further splined internal sleeve surface (14a) for engagement with a further external spline (36a) of a second rotary member so as to inhibit relative movement between the rotary members, the sleeve surface being displaced radially from the further sleeve surface.

2. A resilient sleeve having a splined external sleeve surface for engagement with an internal spline of a second rotary member, the resilient sleeve having a further splined external sleeve surface for engagement with a further internal spline of a first rotary member so as to inhibit relative movement between the rotary members, the sleeve surface being displaced radially from the further sleeve surface.

3. A resilient sleeve in accordance with any preceding claim, wherein the sleeve surface and the further sleeve surface each have spline teeth, the spline teeth of the sleeve surface being circumferentially offset from the spline teeth of the further sleeve surface.

4. A resilient sleeve in accordance with any preceding claim wherein there is provided an additional splined sleeve surface which is for engagement with a further spline of a third rotary member so as to inhibit relative movement between the first and third rotary members.

5. A resilient sleeve in accordance with claim 4 wherein the additional sleeve surface is separated from the further sleeve surface by the sleeve surface.

6. A resilient sleeve in accordance with claim 4 or 5 wherein the additional sleeve surface defines surface features substantially identical to the further sleeve surface.

7. A resilient sleeve in accordance with claim 6 wherein the sleeve surface is arranged between the further sleeve surface and the additional sleeve surface so as to establish an axis of symmetry of the device coexistent with the longitudinal centreline of the sleeve.

8. A resilient sleeve in accordance with any preceding claim wherein the sleeve has internal reinforcement to inhibit centrifugal expansion during rotation.

9. A resilient sleeve in accordance with any preceding claim wherein one of the sleeve surface and further sleeve surface is displaced radially outwardly from the other of the sleeve surface and further sleeve surface, and that surface that is displaced radially outwardly is at an axial end of the sleeve.

10. An assembly including a resilient sleeve having a splined internal sleeve surface and a splined internal further sleeve surface, the assembly further including a first rotary member and a second rotary member, the first rotary member having an external spline in splined connection with an internal spline of the second rotary member, the second rotary member having a further spline, the sleeve surface engaging the external spline of the first rotary member, and the further sleeve surface engaging the further spline of the second rotary member so as to inhibit relative movement between the rotary members, the assembly forming a transmission path where the first rotary member is one of a driving or a driven rotary member, the second rotary member being the other of the driving or driven rotary member.

11. An assembly in accordance with claim 10 in which the first rotary member is part of a drive shaft, the second rotary member being a brake disc, the assembly including a further brake disc defining a third rotary member wherein the brake discs have an upstanding section perpendicular to the axis of rotation of the assembly and a base section concentric with the axis of rotation of the assembly,
the two brake discs being arranged such that the base sections extend inwardly towards each other and are spaced apart so as to receive between them the sleeve surface of the resilient sleeve.

12. An assembly in accordance with claim 11 wherein the radially inner surface of the base sections of the brake discs define internal splines of the second and third rotary members for receiving said part of a drive shaft and the radially outer surfaces of the base sections of the brake discs define external further splines for receiving the further and additional surfaces of the resilient sleeve.

13. An assembly in accordance with any one of claims 10 to 12 wherein the further spline of the sleeve is formed concurrently with the corresponding external or internal spline of the sleeve.

14. A brake assembly for a road vehicle including a brake housing, a brake actuator, further including the assembly in accordance with any one of claims 11 to 13, wherein the actuator is operable so as to effect braking of the brake disc.

15. A vehicle having the brake assembly in accordance with claim 14 wherein the forward motion of the vehicle corresponds to a predetermined direction of rotation of the first, second and third rotary members, the teeth of the sleeve surface of the resilient sleeve being offset with respect to the teeth of the further sleeve surface in the predetermined direction.

16. A method of assembling a brake assembly comprising the steps of
providing a part of a drive shaft, providing a brake sub-assembly having; a brake housing, a brake actuator, two brake discs, a resilient sleeve in accordance with any one of claims 1 or 3 to 9 when dependent on claim 1, wherein the splines of the brake discs are substantially co-aligned by their splined engagement with the resilient sleeve, comprising the further step of inserting the part of a drive shaft into the sub-assembly by engaging the external spline of the part of a drive shaft with the aligned internal splines of the brake discs.
